# EUROPÄISCHE PATENTSCHRIFT

(11) **EP 1 701 985 B1**
(45) Veröffentlichungstag und Bekanntmachung des Hinweises auf die Patenterteilung: **27.08.2008**
(21) Anmeldenummer: 04804379.8
(22) Anmeldetag: 29.12.2004
(51) Int. Cl.: C08F 8/26, C08F 10/10, C08F 4/14

(54) **HERSTELLUNG HOCHREAKTIVER POLYISOBUTENE MIT NIEDRIGEM HALOGENGEHALT**
METHOD FOR PRODUCING HIGHLY REACTIVE, LOW HALOGEN POLYISOBUTENES
PRODUCTION DE POLYISOBUTENE A FAIBLE TENEUR EN HALOGENE ET HAUTEMENT REACTIF

(30) Priorität: 30.12.2003 DE 10361633
(43) Veröffentlichungstag der Anmeldung: 20.09.2006
(73) Patentinhaber: BASF SE, 67056 Ludwigshafen (DE)
(72) Erfinder: RATH, Hans, Peter, 67269 Grünstadt (DE); PERNER, Thomas, 76879 Esslingen (DE); SCHAUSS, Eckard, 67259 Heuchelheim (DE)
(74) Vertreter: Reitstötter - Kinzebach
(86) Internationale Anmeldenummer: PCT/EP2004/014793
(87) Internationale Veröffentlichungsnummer: WO 2005/066220

(56) Entgegenhaltungen:
- EP-A- 1 081 165
- EP-A- 1 469 013
- US-B1- 6 441 110

## Beschreibung

Die Erfindung betrifft ein Verfahren zur Herstellung hochreaktiver Polyisobutene mit niedrigem Halogengehalt.

Die so genannten hochreaktiven Polyisobutene sind Polyisobutene mit einem hohen Gehalt an Methylidengruppen. Unter Methylidengruppen werden im Sinne der vorliegenden Anmeldung solche Doppelbindungen verstanden, deren Lage im Polyisobutenmakromolekül durch die allgemeine Formel 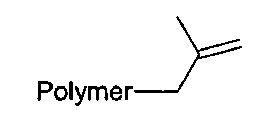 beschrieben wird, in der "Polymer" für den um eine Isobuteneinheit verkürzten Polyisobutenrest steht. Die Methylidengruppen zeigen die höchste Reaktivität, wohingegen die weiter im Inneren der Makromoleküle liegenden Doppelbindungen je nach ihrer Lage im Makromolekül keine oder nur eine geringere Reaktivität bei Funktionalisierungsreaktionen zeigen. Der Anteil an Methylidengruppen im Molekül ist daher das wichtigste Qualitätsmerkmal der Polyisobutene. Hochreaktive Polyisobutene werden unter anderem als Zwischenprodukt zur Herstellung von Additiven für Schmier- und Kraftstoffe verwendet.

Hochreaktive Polyisobutene können durch Polymerisation von Isobuten unter Katalyse verschiedener Lewis-Säuren erhalten werden. Besonders vorteilhaft sind halogenhaltige Lewis-Säuren wie Bortrifluorid oder Titantetrachlorid.

Bei der Katalyse mit halogenhaltigen Lewis-Säuren kommt es jedoch als Nebenreaktion zur Anlagerung von Halogen an das Polyisobuten bzw. zur Bildung halogenhaltiger Nebenprodukte, wie tertiärer Fluoride des Isobutens und seiner Oligomeren, die teilweise nur schwer aus dem Polyisobuten zu entfernen sind und dieses kontaminieren. Bei der Lagerung des Polyisobutens, insbesondere unter dem Einfluss von Feuchtigkeit, zerfallen die halogenierten Nebenprodukte unter Freisetzung von Halogenwasserstoff, wie Fluorwasserstoff, der zu Korrosion an Behältern, Anlagenteilen und dergleichen führt.

Außerdem wurde beobachtet, dass der Gehalt an Methylidengruppen hochreaktiver Polyisobutene bei der Lagerung, insbesondere bei erhöhter Temperatur, abnimmt. Vermutlich bewirken saure Kontaminanten und/oder der freigesetzte Halogenwasserstoff eine Doppelbindungisomerisierung Methylidendoppelbindungen zu thermodynamisch stabileren innenliegenden Doppelbindungen.

Die EP-A 1 081 165 beschreibt eine Möglichkeit zur Verringerung des Halogengehalts von Polyisobuten, indem man es unter Bedingungen mit Aluminiumoxid behandelt, die eine Doppelbindungsisomerisierung weitgehend verhindern. Die Behandlung erfolgt z. B. an einem Aluminiumoxid-Festbett. Es wird postuliert, dass an der Aluminiumoxidoberfläche eine Spaltung der halogenierten Polyisobutenmoleküle unter Rückbildung von Vinylidengruppen erfolgt.

Das Verfahren erfordert hohe Behandlungstemperaturen von z. B. über 100 °C. Derartige hohe Temperaturen sind nachteilig. Bei der Polymerisation von Isobuten werden häufig leichtflüchtige Verdünnungsmittel, wie C₄-Kohlenwasserstoffe, verwendet. Es ist wünschenswert, die primär erhaltene Lösung des Polyisobutens in dem leichtflüchtigen Verdünnungsmittel direkt der Spaltbehandlung zu unterziehen und das Erfordernis zu umgehen, das Polyisobuten zu isolieren und in einem zweiten, höher siedenden Verdünnungsmittel aufzunehmen. Die Handhabung der primär erhaltenen Polyisobutenlösung bei hohen Temperaturen ist aber schwierig und gefährlich, da die Verdünngsmittel entflammbar sind und der Dampfdruck der Lösung beim Erwärmen stark ansteigt.

Bei niedrigen Behandlungstemperaturen haben die vorliegenden Erfinder eine anfängliche gute Entfernung von Halogenverbindungen gefunden; bei längerem Betrieb erfolgt jedoch ein "Durchbruch" halogenierter Verbindungen und die Halogenkontamination im Effluat steigt stark an. Dies legt nahe, dass die Halogenentfernung bei niedrigen Temperaturen auf einem Chromatographieeffekt beruht, wobei halogenierte Polyisobutene stärker vom Aluminiumoxid zurückgehalten werden als nicht-halogenierte. Sobald die "Front" der halogenierten Polyisobutenmoleküle das Austrittsende des Adsorptionsbetts erreicht, erfolgt keine weitere Halogenentfernung mehr.

Der Erfindung liegt daher die Aufgabe zu Grunde, ein Verfahren anzugeben, das die beschriebenen Nachteile nicht aufweist, d. h. das im Wesentlichen nicht auf Chromatographieeffekten beruht und bei dem eine echte Spaltung der halogenierten Isobutenmoleküle bei moderaten Temperaturen erfolgt, so dass das Verfahren einen langfristigen Betrieb eines Adsorptionsbetts ohne "Durchbruch" halogenierter Verbindungen erlaubt.

Diese Aufgabe wird gelöst durch ein Verfahren zur Herstellung von Polyisobuten mit einem zahlenmittleren Molekulargewicht von 400 bis 50000 und einem Gehalt an Methylidengruppen von mehr als 50 Mol-%, bei dem man
a) Isobuten in Gegenwart eines Katalysators polymerisiert, der eine halogenhaltige Lewis-Säure umfasst,
b) den Katalysator abtrennt und/oder deaktiviert, und
c) das erhaltene Polyisobuten mit einem Zeolith einer durchschnittlichen Porengröße von 5 bis 15 Å in Kontakt bringt.

Der Ausdruck "Gehalt an Methylidengruppen" bezieht sich auf den prozentualen Anteil von Polyisobutenmolekülen mit Methylidengruppe, bezogen auf die Zahl aller olefinisch ungesättigten Polyisobutenmoleküle in einer Probe. Er kann durch ¹H-NMR- und/oder ¹³C-NMR-Spektroskopie ermittelt werden, wie dem Fachmann geläufig ist. Der Gehalt an Methylidengruppen beträgt mehr als 50 Mol-%, vorzugsweise wenigstens 60 Mol-%, besonders bevorzugt wenigstens 75 Mol-%.

Das nach dem erfindungsgemäßen Verfahren erhaltene Polyisobuten weist ein zahlenmittleres Molekulargewicht Mn von 400 bis 50000, vorzugsweise 500 bis 5000, insbesondere 700 bis 2500 auf. Die Dispersizität (D = Mw/Mn) beträgt typischerweise weniger als 2,5, vorzugsweise weniger als 2,0 und insbesondere weniger als 1,8.

Aufgrund der hohen Viskosität der Polyisobutene ist es bevorzugt, das Polyisobuten nicht als solches, sondern in Form einer Lösung in einem Verdünnungsmittel mit dem Adsorptionsmittel zu behandeln. Die Polymerisation des Isobutens erfolgt in der Regel in Gegenwart eines Verdünnungsmittels, wobei man eine Lösung des Polyisobutens in dem Verdünnungsmittel erhält. Die erhaltene Lösung des Polyisobutens wird dann wie beschreiben weiter behandelt. Alternativ kann man vor dem Inkontaktbringen mit dem Zeolith das Verdünnungsmittel ganz oder teilweise entfernen oder durch Isobutenoligomere ersetzen. Unter "Isobutenoligomeren" sollen vorwiegend aus Isobuten-Wiederholungseinheiten aufgebaute Moleküle mit 8 bis 40 Kohlenstoffatomen (entsprechend einem Molekulargewicht von 112 bis 560) verstanden werden. Besonders zweckmäßig benutzt man Isobutenoligomere, die bei der destillativen Aufarbeitung von Isobutenpolymerisaten anfallen ("Oligomerdestillate").

Zum Inkontaktbringen des Polyisobutens (soweit aus dem Kontext nicht anders ersichtlich, soll "Polyisobuten" im Folgenden auch die Lösung des Polyisobutens in einem Verdünnungsmittel umfassen) mit dem Zeolith sind allen denkbaren diskontinuierlichen und kontinuierlichen Verfahren geeignet. So kann man das Polyisobuten mit Portionen des Adsorptionsmittels versetzen, vorzugsweise unter mechanischer Bewegung, und nach ausreichender Verweilzeit abtrennen, z. B. durch Filtration, Abdekantieren oder ein sonstiges geeignetes Verfahren. Zweckmäßigerweise liegt der Zeolith in einer Festbettschüttung vor, die in einer Adsorptionssäule angeordnet ist, durch die das Polyisobuten geleitet wird. Die Adsorptionssäule ist vorzugsweise vertikal angeordnet und wird vom Stoffstrom in Richtung der Schwerkraft oder vorzugsweise entgegen der Schwerkraft durchströmt. Es können auch mehrere hintereinandergeschaltete Adsorptionssäulen verwendet werden.

Die Behandlung mit dem Zeolith erfolgt im Allgemeinen bei einer Temperatur von 5 bis 100 °C, vorzugsweise 40 bis 95 °C.

Zeolithe, die auch als Molekularsiebe bezeichnet werden, sind kristalline Aluminosilikate, die ein hochgeordnetes Gerüst mit einem starren dreidimensionalen Netzwerk von SiO₄- und AlO₄-Tetraedern aufweisen, welche durch gemeinsame Sauerstoffatome verbunden sind. Zur Kompensation der Elektrovalenz der Aluminium enthaltenden Tetraeder enthalten die Zeolithe Kationen. Das Aluminium im Gitter der Zeolithe kann ganz oder teilweise durch andere Elemente wie B, Ga, Fe, Cr, V, As, Sb, Bi oder Be oder Gemische davon ersetzt sein. Das Silicium kann durch ein anderes vierwertiges Element, z. B. Ge, Ti, Zr oder Hf, ersetzt sein.

Zeolithe können nach bekannten Verfahren synthetisch hergestellt werden, vgl. z. B. Ullmanns Enzyklopädie d. Techn. Chemie, 4. Aufl. Bd. 17 S. 9-17 (1983). Die Zeolithe können in eine oxidische Bindemittelmatrix, z. B. aus Aluminiumoxiden, Siliciumdioxid, Gemischen von hochdispersem Siliciumdioxid und Aluminiumoxid, Titandioxid, Zirkondioxid oder Ton eingebettet und zu Förmkörpern wie Strängen, Kugeln oder Tabletten geformt werden.

Im erfindungsgemäßen Verfahren werden Zeolithe mit mittleren Porengrößen von 5 bis 15 Å eingesetzt. Die mittlere Porengröße ist durch den Kristallaufbau festgelegt und kann z. B. aus Röntgenstrukturdaten ermittelt werden. In Zeolithe mit kleineren mittleren Porengrößen können die halogenierten Nebenprodukte schlecht eindiffundieren und werden daher unzureichend gespalten/adsorbiert. Zeolithe mit größeren mittleren Porengrößen können zur vermehrten Doppelbindungsisomerisierung des Polyisobutens führen, insbesondere wenn sie durch Spuren von Fluorwasserstoff oder Wasser aktiviert sind.

Der Zeolith ist vorzugsweise im Wesentlichen säurefrei, um eine übermäßige Doppelbindungsisomerisierung der terminalen Methylidendoppelbindungen des Polyisobutens zu thermodynamisch stabileren Doppelbindungen im Inneren des Makromoleküls zu vermeiden. Man verwendet daher vorzugsweise nicht aktivierte Zeolithe, d. h. solche, die zur Ladungskompensation der negativen Gerüstladung keine Protonen enthalten. Im Allgemeinen werden handelsübliche Zeolithe mit basischen pH-Werten ausgeliefert und enthalten Alkali- und/oder Erdalkalimetallkationen zur Ladungskompensation. Derartige Zeolithe haben hohe Basizitätsreserven.

Bevorzugte Zeolithe sind unter Zeolith A, Zeolith L, Zeolith X und Zeolith Y ausgewählt. Natrium-Zeolith A oder Natrium-Zeolith A, in dem die Natriumionen ganz oder teilweise durch Magnesium- und/oder Calciumionen ersetzt sind, ist besonders bevorzugt.

Bei der erfindungsgemäßen Zeolith-Behandlung werden vermutlich die halogenierten Nebenprodukte gespalten und die halogenhaltigen Spaltprodukte, wie Fluorwasserstoff, am Zeolith adsorbiert bzw. von den enthaltenen Kationen chemisch gebunden. Um eine unerwünschte Aktivierung und/oder strukturelle Veränderung des Zeoliths zu verhindern, ist es bevorzugt, den im Reaktionsaustrag enthaltenen und/oder bei der Spaltung der halogenierten Polyisobutene gebildeten Halogenwasserstoff auch durch andere Säurefänger zu binden.

In bevorzugten Ausführungsformen wird das Polyisobuten daher außerdem mit einem Säurefänger in Kontakt gebracht, der unter Basen, Nitrilverbindungen und immobilisierten Basen ausgewählt ist. Das Inkontaktbringen mit dem Säurefänger erfolgt vorzugsweise vor der Zeolith-Behandlung. Die Basen oder Nitrilverbindungen werden in geeignter Menge zum (zur) Polyisobutenlösung dosiert, z. B. in einer Menge von 5 bis 500 ppm. Man kann auch den Zeolith mit der Base oder Nitrilverbindung vorbehandeln. Bei Verwendung einer immobilisierten Base kann man das (die) Polyisobuten(lösung) über eine Schüttung der immobilisierten Base leiten.

Als Base eignen sich Ammoniak, organische Amine bzw. Polyamine oder Hydroxylamin. Beispielhafte organische Amine sind Methylamin, Dimethylamin, Ethylamin, Diethylamin, Triethylamin, Propylamin, Isopropylamine, Diisopropylamin, 2-Ethylhexylamin, Diisobutylamin, sec-Butylamin, tert-Butylamin, Tri-n-octylamin, Di-2-ethylhexylamin, Allylamin, Diallylamin, Triallylamin, Anilin, Benzylamin, Ethylendiamin, Hexamethylendiamin, Tretramethylethylendiamin, Diethylentriamin, Triethylentetramin und Tetraethylpentamin, 3-(Methylamino)propylamin, 3-(Dimethylamino)propylamin und 3-(Dibutylamino)propylamin; Oxyamine wie 3-Methoxypropylamin, 3-Ethoxypropylamin, und 3-(2-Ethylhexyloxy)propylamin; Hydroxylamine wie N-Methylethanolamin, N,N-Dimethylethanolamin, N,N-Diethylethanolamin, N,N-Dibutylethanolamin, N-Methyldiethanolamin, N-(2-Aminoethyl)ethanolamin und 3-Amino-1-propanol; und Pyridine wie Pyridine und 4-Aminopyridin. Ferner kann man Aminosäuren wie β-Alanin verwenden. Die Aufzählung soll nicht abschließend sein.

Beispielhafte Nitrilverbindungen sind Acetonitril, Propionitril und Benzonitril.

Unter "immobilisierter Base" werden feste, im Polyisobuten bzw. der Polyisobutenlösung im Wesentlichen unlösliche Basen oder Basen, die auf einen unlöslichen Träger, vorzugsweise einen porösen Träger, aufgebracht sind, verstanden. Unlösliche Basen sind unter anderem Calciumcarbonat, Dolomit, Magnesiumoxid, Zinkoxid. Bei dem porösen Träger kann es sich um einen beliebigen festen Träger handeln, wie Aluminiumoxid, Aktivkohle, Kieselgel, Kieselgur und dergleichen.

Zur Immobilisierung auf einem Träger eignen sich vor allem Hydroxide, Oxide, Carbonate, Hydrogencarbonate und/oder Cyanide, insbesondere von Alkalimetallen, wie Natrium oder Kalium, Erdalkalimetallen, wie Magnesium oder Calcium, oder Zink. Das Immobilisieren der Base auf dem Träger (auch als Dotieren des Trägers mit der Base bezeichnet) erfolgt z. B. durch Imprägnieren des Trägers mit einer Lösung der Base und Trocknen. Besonders bevorzugt sind Natrium- oder Kaliumhydroxid und -cyanid.

Vorzugsweise ist die immobilisierte Base ausgewählt unter Aluminiumoxid und Aluminiumoxid, das mit einer Base dotiert ist, insbesondere einem oben genannten Hydroxid, Oxid, Carbonat, Hydrogencarbonat und/oder Cyanid,.

In einer bevorzugten Ausführungsform bringt man das Polyisobuten nacheinander mit
(i) einer immobilisierten Base, vorzugsweise bei einer Temperatur von 5 bis 40 °C, und
(ii) einem Zeolith einer durchschnittlichen Porengröße von 5 bis 15 Å, vorzugsweise bei einer Temperatur von 40 bis 100 °C, in Kontakt.

Die Deaktivierung/Entfernung des Katalysators erfolgt in vielen Fällen durch Behandlung/Extraktion des Reaktionsaustrages mit Wasser oder einer wässrigen Lösung. Es ist vorteilhaft, die mitgeführten Wasserspuren weitgehend zu entfernen und das (die) Polyisobuten(lösung) vor der Zeolithbehandlung zu trocknen und den Wassergehalt z. B. auf weniger als 5 ppm, vorzugsweise weniger als 3 ppm zu verringern. Vorzugsweise behandelt man das (die) Polyisobuten(lösung) in geeigneter Weise, um die Koaleszenz der noch enthaltenen Wasserphase zu fördern, z. B. mittels Filtration über einen Koaleszierfilter. Um den Wassergehalt weiter zu verringern, kann man das Polyisobuten mit einem Zeolith einer durchschnittlichen Porengröße von 4 Å oder weniger in Kontakt bringen. Hierbei sind möglichst tiefe Temperaturen bevorzugt, vorzugsweise eine Temperatur von weniger als 40 °C, z. B. 5 bis 35 °C.

In einer bevorzugten Ausführungsform bringt man daher das Polyisobuten nacheinander mit (i) einem ersten Zeolith einer durchschnittlichen Porengröße von 4 Å oder weniger, vorzugsweise bei einer Temperatur von 5 bis 35 °C, und (ii) einem zweiten Zeolith einer durchschnittlichen Porengröße von 5 bis 15 Å, vorzugsweise bei einer Temperatur von 40 bis 100 °C, in Kontakt. Zweckmäßigerweise kann man dazu eine strukturierte Schüttung zweier unterschiedlicher Zeolithe oder eine Anordnung in Reihe geschalteter Adsorptionssäulen verwenden. So leitet man den Stoffstrom über ein oder mehrere Festbetten, die stromaufwärts zur Strömungsrichtung des Stoffstromes einen Zeolith mit einer mittleren Porengröße von 4 Å oder weniger und stromabwärts einen Zeolith mit einer mittleren Porengröße von 5 bis 15 Å umfassen.

In einer besonders bevorzugten Ausführungsform bringt man das Polyisobuten nacheinander mit (i) einer immobilisierten Base, (ii) einem ersten Zeolith einer durchschnittlichen Porengröße von 4 Å oder weniger und (iii) einem zweiten Zeolith einer durchschnittlichen Porengröße von 5 bis 15 Å in Kontakt.

Nach der Adsorptionsmittelbehandlung werden das Verdünnungsmittel und gegebenenfalls das nicht umgesetzte Isobuten abgetrennt, in der Regel durch Abdestillieren. Das abdestillierte Verdünnungsmittel kann in den Polymerisationsreaktor zurückgeführt werden, vorzugsweise ohne weitere Behandlung.

Nach Abtrennung des Verdünnungsmittels wird der Rückstand, der das gewünschte Polyisobuten enthält, in üblicher Weise aufgearbeitet. Flüchtige Oligomere des Isobutens werden zusammen mit Verdünnungsmittelresten nach üblichen Methoden destillativ entfernt, z. B. bei Temperaturen bis 230 °C im Vakuum. Es eignen sich Umlaufverdampfer, Fallfilmverdampfer, Dünnschichtverdampfer, Sambay-Verdampfer, Ringspaltverdampfer und dergleichen.

Die Polymerisation von Isobuten erfolgt vorzugsweise in einem kontinuierlichen Verfahren. Maßnahmen zur kontinuierlichen Polymerisation von Isobuten in Gegenwart von Lewis-Säuren wie Bortrifluorid und wenigstens einem Cokatalysator in inerten organischen Lösungsmitteln zu Polyisobuten sind an sich bekannt. Bei einem kontinuierlichen Verfahren wird kontinuierlich ein Teil der im Polymerisationsreaktor entstandenen Reaktionsmischung ausgetragen. Eine dem Austrag entsprechende Menge an Einsatzmaterialien wird dem Polymerisationsreaktor kontinuierlich zugeführt und mit einer Umlaufmenge vermischt. Das Verhältnis von Umlaufmenge zu Zulaufmenge liegt laufmenge vermischt. Das Verhältnis von Umlaufmenge zu Zulaufmenge liegt in der Regel im Bereich von 1 000:1 bis 1:1, erfindungsgemäß bevorzugt im Bereich von 500:1 bis 5:1 und insbesondere im Bereich von 20:1 bis 100:1 v/v. Die mittlere Verweildauer des zu polymerisierenden Isobutens im Polymerisationsreaktor, die durch Reaktionsvolumen und Zulaufmenge bestimmt wird, kann 5 Sekunden bis mehrere Stunden betragen. Verweilzeiten von 1 bis 30 min, insbesondere 2 bis 20 min sind bevorzugt. Die Polymerisation des Isobutens erfolgt in den für die kontinuierliche Polymerisation üblichen Reaktoren, wie Rührkesseln, Plattenwärmetauschern, Rohr-, Rohrbündel- und Schlaufenreaktoren, wobei Schlaufenreaktoren, d. h. Rohr(bündel)-reaktoren mit Umlauf und turbulenter Strömung oder Einbauten wie statischen Mischern, d. h. mit Rührkesselcharakteristik, bevorzugt sind. Besonders günstig sind dabei Schlaufenreaktoren mit Rohrquerschnitten, die zu turbulenter Strömung führen. Es können hintereinander geschaltete Reaktoren verwendet werden, insbesondere Anordnungen aus Haupt- und Nachreaktor.

Die Polymerisation erfolgt im Allgemeinen bei einer Temperatur im Bereich von -60 °C bis +40 °C, vorzugsweise weniger als 0 °C, besonders bevorzugt im Bereich von -5 °C bis -40 °C und speziell im Bereich von -10 °C bis -30 °C. Die Polymerisationswärme wird entsprechend mit Hilfe einer Kühlvorrichtung abgeführt. Diese kann beispielsweise mit flüssigem Ammoniak als Kühlmittel betrieben werden. Eine andere Möglichkeit, die Polymerisationswärme abzuleiten, ist die Siedekühlung. Dabei wird die freiwerdende Wärme durch Verdampfen des Isobutens und/oder anderer leichtflüchtiger Bestandteile des Isobuten-Feedstocks oder des gegebenenfalls leichtflüchtigen Lösungsmittels abgeführt. Vorzugsweise arbeitet man im erfindungsgemäßen Polymerisationsverfahren unter isothermen Bedingungen, d.h. die Temperatur der flüssigen Reaktionsmischung im Polymerisationsreaktor hat einen stationären Wert und ändert sich während des Betriebs des Reaktors nicht oder nur in geringem Maße.

Die Konzentration des Isobutens in der flüssigen Reaktionsphase liegt in der Regel im Bereich von 0,2 bis 50 Gew.-%, vorzugsweise im Bereich von 0,5 bis 20 Gew.-% und insbesondere im Bereich von 1 bis 10 Gew.-%, bezogen auf die flüssige Reaktionsphase. Bei der Herstellung von Polyisobutenen mit zahlenmittleren Molekulargewichten Mn im Bereich von 500 bis 5000 arbeitet man vorzugsweise bei einer Isobutenkonzentration im Bereich von 1 bis 20 Gew.-% und insbesondere im Bereich von 1,5 bis 15 Gew.-%. Sofern man eine Anordnung von Hauptreaktor und nachgeschaltetem Nachreaktor verwendet, gelten die genannten Konzentrationen für den Hauptreaktor. Bei der Herstellung von Polyisobutenen mit einem zahlenmittleren Molekulargewicht Mn von mehr als 5000 arbeitet man bevorzugt bei einer Isobutenkonzentration im Bereich von 4 bis 50 Gew.-%.

Der Isobutenumsatz kann prinzipiell beliebig eingestellt werden. Es versteht sich aber von selbst, dass bei sehr niedrigen Isobutenumsätzen das Verfahren unwirtschaftlich ist, wohingegen bei sehr hohen Isobutenumsätzen von mehr als 99% die Gefahr von Doppelbindungsverschiebungen immer größer wird und kürzere Reaktionszeiten und eine verbesserte Wärmeabfuhr erforderlich werden. Üblicherweise wird der Isobutenumsatz aus diesen Gründen im Hauptreaktor bis zu Werten im Bereich von 20% bis 99% geführt. Besonders bevorzugt sind Isobutenumsätze im Bereich von 70% bis 98%.

Als Einsatzstoffe für das erfindungsgemäße Verfahren eignen sich sowohl Isobuten selbst als auch Isobuten-haltige C₄-Kohlenwasserstoffströme, beispielsweise C₄-Raffinate, C₄-Schnitte aus der Isobuten-Dehydrierung, C₄-Schnitte aus Steamcrackern, FCC-Crackern (Fluid Catalyst Cracking), sofern sie weitgehend von darin enthaltenen 1,3-Butadien befreit sind. Erfindungsgemäß geeignete C₄-Kohlenwasserstoffströme enthalten in der Regel weniger als 1000 ppm, vorzugsweise weniger als 200 ppm Butadien. Typischerweise liegt die Konzentration von Buten-1, cis- und trans-Buten-2 in den C₄-Kohlenwasserstoffströmen im Bereich von 40 bis 70 Gew.-%. Derartige C₄-Kohlenwasserstoffströme sind bevorzugte Einsatzmaterialien für das erfindungsgemäße Verfahren. Bei Einsatz von C₄-Schnitten als Einsatzmaterial übernehmen die von Isobuten verschiedenen Kohlenwasserstoffe die Rolle eines inerten Verdünnungsmittels.

Für das erfindungsgemäße Verfahren sind solche Verdünnungsmittel oder Verdünnungsmittelgemische geeignet, die gegenüber den eingesetzten Reagenzien inert sind. Geeignete Verdünnungsmittel sind gesättigte oder ungesättigte aliphatische, cacloaliphatische und aromatische Kohlenwasserstoffe, beispielsweise gesättigte Kohlenwasserstoffe, wie Butan, Pentan, Hexan, Heptan, Oktan z.B. n-Hexan, i-Oktan, Cyclopentan, Cyclohexan, Methylcyclohexan, Toluol oder Ethylbenzol; halogenierte Kohlenwasserstoffe wie Methylchlorid, Dichlormethan oder Trichlormethan sowie Mischungen der vorgenannten Verbindungen. Vorzugsweise werden die Lösungsmittel vor ihrem Einsatz im erfindungsgemäßen Verfahren von Verunreinigungen wie Wasser, Carbonsäuren oder Mineralsäuren befreit, beispielsweise durch Adsorption an festen Adsorbentien, wie Aktivkohle, Molekularsieben oder Ionenaustauschern.

Im erfindungsgemäßen Verfahren wird die Polymerisation in Gegenwart eines Katalysators durchgeführt, der eine Lewis-Säure wie Bortrifluorid, AlCl₃, TiCl₄, BCl₃ oder Aluminiumalkylhalogenide umfasst.

Besonders bevorzugt sind Bortrifluorid-Komplexkatalysatoren. Hierunter versteht man Katalysatoren aus Bortrifluorid und wenigstens einem Cokatalysator. Geeignete Cokatalysatoren sind in der Regel sauerstoffhaltige Verbindungen. Geeignete sauerstoffhaltige Verbindungen sind neben Wasser organische Verbindungen mit bis zu 30 Kohlenstoffatomen, die wenigstens ein an Kohlenstoff gebundenes Sauerstoffatom enthalten. Beispiele hierfür sind C₁-C₁₀-Alkanole und -Cycloalkanole, C₂-C₁₀-Diole, Phenol und Alkylphenole, C₁-C₂₀-Carbonsäuren, C₄-C₁₂-Carbonsäureanhydride sowie C₂-C₂₀-Dialkylether. Hierunter bevorzugt werden einwertige Alkanole mit 1 bis 20 C-Atomen, insbesondere mit 1 bis 4 C-Atomen, die gegebenenfalls zusammen mit den C₁-C₂₀-Dialkylethern eingesetzt werden können. Erfindungsgemäß bevorzugt werden in Bortrifluorid-Komplex-Katalysatoren Molverhältnisse von Bortrifluorid zu sauerstoffhaltiger Verbindung im Bereich von 1:1 bis 1:10, insbesondere im Bereich von 1:1,1 bis 1:5 und speziell im Bereich von 1:1,2 bis 1:2,5. Die BF₃-Konzentration im Reaktor wird man in der Regel im Bereich von 0,01 bis 1 Gew.-%, bezogen auf die flüssige Reaktionsphase, insbesondere im Bereich von 0,02 bis 0,7 Gew.-% und speziell im Bereich von 0,03 bis 0,5 Gew.-% variieren.

Die sauerstoffhaltige Verbindung im Bortrifluorid-Komplex-Katalysator umfasst besonders bevorzugt wenigstens einen einwertigen, sekundären Alkohol mit 3 bis 20 Kohlenstoffatomen. Beispielhaft für geeignete sekundäre Alkohole seien die folgenden genannt: Isopropanol, 2-Butanol, sowie ferner sec.-Pentanole, sec.-Hexanole, sec.-Heptanole, sec.-Octanole, sec.-Nonanole, sec.-Decanole oder sec.-Tridecanole. Außer einwertigen, sekundären Alkoholen können auch (poly-)Etherole des Propen- und Butenoxids verwendet werden. Bevorzugt wird 2-Butanol und insbesondere Isopropanol verwendet.

Die Bortrifluorid-Komplexe können in separaten Reaktoren vor ihrem Einsatz im erfindungsgemäßen Verfahren vorgebildet werden, nach ihrer Bildung zwischengelagert und je nach Bedarf in die Polymerisationsapparatur eindosiert werden.

Eine andere, bevorzugte Variante besteht darin, dass man die Bortrifluorid-Komplexe in situ in der Polymerisationsapparatur erzeugt. Bei dieser Verfahrensweise wird der jeweilige Cokatalysator gegebenenfalls gemeinsam mit einem Lösungsmittel in die Polymerisationsapparatur eingespeist und Bortrifluorid in der erforderlichen Menge in dieser Mischung der Reaktanten gelöst bzw. komplexiert. Hierbei setzt sich das Bortrifluorid und der Cokatalysator zum Bortrifluorid-Komplex um. Anstelle eines zusätzlichen Lösungsmittels kann bei der in situ-Erzeugung des Bortrifluorid-Katalysator-Komplexes Isobuten oder die Reaktionsmischung aus nicht umgesetztem Isobuten und Polyisobuten als Lösungsmittel fungieren.

Weitere geeignete Cokatalysatoren sind tertiäre Chloride, die als Initiatoren der lebenden kationischen Polymerisation Verwendung finden, wie p-Dicumylchlorid oder m-Dicumylchlorid. Kombinationen von TiCl₄ und tertiären Chloriden haben sich besonders bewährt.

Die aus dem Polymerisationsreaktor ausgetragene Reaktionsmischung enthält noch polymerisierbares Isobuten und Katalysator. Daher schreitet in der Regel die Polymerisation auch im Austrag fort. Hierdurch kann sich das im Polymerisationsreaktor gebildete Polyisobuten nachteilig hinsichtlich Molekulargewicht, Molekulargewichtsverteilung und Endgruppengehalt verändern. Um eine weitere Reaktion zu verhindern, wird daher üblicherweise die Polymerisation durch Deaktivierung des Katalysators abgebrochen. Die Deaktivierung kann beispielsweise durch Zugabe von Wasser, Alkoholen, Acetonitril, Ammoniak oder wässrigen Lösungen von Mineralbasen oder durch Einleiten des Austrags in eines der vorgenannten Medien bewirkt werden. Bevorzugt ist die Deaktivierung mit Wasser oder wässrigem Ammoniak, die vorzugsweise bei Temperaturen im Bereich von 1 bis 60 °C (Wassertemperatur) durchgeführt wird. Der so deaktivierte Austrag wird in der oben beschriebenen Weise weiterbehandelt.

Bortrifluorid-Komplex-Katalysatoren können auch aus dem Austrag weitgehend abgetrennt und in die Polymerisationsreaktion zurückgeführt werden. Die Abtrennung und Rückführung des Katalysators aus dem Austrag der Polymerisationsreaktion ist aus der WO 99/31151 bekannt, auf die hiermit in vollem Umfang Bezug genommen wird. Zur Abtrennung des Katalysators aus dem Austrag verwendet man bevorzugt begrenzt lösliche Bortrifluorid-Komplex-Katalysatoren und/oder kühlt das Reaktionsgemisch auf Temperaturen von beispielsweise 5 bis 30 Kelvin unterhalb Reaktortemperatur, vorzugsweise 10 bis 20 Kelvin unterhalb Reaktortemperatur ab. Bei der Abtrennung des Katalysators aus dem Reaktoraustrag empfiehlt es sich, zuvor die Isobutenkonzentration im Austrag auf Werte unterhalb 2 Gew.-%, vorzugsweise 1 Gew.-% und insbesondere unterhalb 0,5 Gew.-%, bezogen auf den Austrag, abzusenken. In der Regel wird man daher den Reaktoraustrag einer weiteren Polymerisationsstufe vor Abtrennung des Katalysators unterwerfen. Daher ist die in der WO 96/40808 beschriebene mehrstufige Polymerisation von Isobuten, bei der Restisobuten des Hauptreaktors auf etwa 0,5 % im Nachreaktor abreagiert, eine bevorzugte Fahrweise für das erfindungsgemäße Verfahren. Vorzugsweise wird diese zweite Polymerisationsstufe bei der gleichen Temperatur wie die erste Polymerisationsstufe oder bei einer niedrigeren Polymerisationstemperatur als die erste Polymerisationsstufe betrieben. In der Regel beträgt die Temperaturdifferenz dabei 0 bis 20 Kelvin, vorzugsweise 0 bis 10 Kelvin.

Durch die Nachreaktion, insbesondere die gekühlte Nachreaktion, kommt es zu einer verstärkten Komplexabscheidung. Die Löslichkeit des Komplexes fällt dabei um wenigstens eine 10er-Potenz, insbesondere, wenn dabei noch eine Temperaturabsenkung vorgenommen wird. Hierbei fällt der Katalysator in Form feinverteilter Tröpfchen an, die in der Regel rasch in eine kohärente Phase übergehen. Die Komplextröpfchen bzw. die kohärente Phase haben eine deutlich höhere Dichte als die Polymerlösung. Sie können daher in der Regel mit Hilfe von Abscheidern, Separatoren oder sonstigen Sammelbehältern von der polymerreichen, katalysatorarmen Produktphase abgetrennt werden. Die dabei abgetrennte polymerreiche Produktphase ist im Allgemeinen homogen und enthält nur noch geringe Mengen löslicher Katalysatoranteile. Diese werden in der zuvor beschriebenen Weise, vorzugsweise mit Wasser, deaktiviert.

Die Erfindung wird durch die folgenden Beispiele näher veranschaulicht.

### Vergleichsbeispiele 1 und 2 und Beispiel 3

Man verwendete einen Reaktor, der aus einem Teflonschlauch von 7,1 m Länge und einem Inndurchmesser von 6 mm bestand, über den durch eine Zahnradpumpe 1000 l/h Reaktorinhalt im Kreis geführt wurden. Rohr und Pumpe hatten ein Volumen von etwa 200 ml. Der Teflonschlauch und der Pumpenkopf waren in einem Kältebad von-25 °C (Kryostat) angeordnet. Über eine Kapillare mit 2 mm Innendurchmesser führte man 700 g/h einer auf -25 °C vorgekühlten, an Molekularsieb 3 Å bei einer Kontaktzeit von 10 min auf weniger als 3 ppm Wasser getrockneten 50 Gew.-%igen Lösung von Isobuten in Hexan als Zulauf zu. 5,01 mmol/h Bortrifluorid, 8,0 mmol/h Methanol und 0,20 mmol/h Ethylhexanol wurden direkt in den Umlauf auf der Saugseite der Umwälzpumpe eingespeist. Bei einer Reaktorinnentemperatur von -18 °C stellte sich eine stationäre Isobutenkonzentration von 4,1 Gew.-% ein.

Der Reaktionsaustrag wurde unmittelbar nach Verlassen des Umlaufs durch eine Stahlkapillare mit einem Innendurchmesser von 1 mm und 1 m Länge gedrückt, die im Kältebad angeordnet war, dann mit aliquoten Wassermengen in einer Mischpumpe gequencht.

### Nach der Phasentrennung behandelte man die organische Phase wie folgt:

In den Vergleichsbeispielen 1 und 2 leitete man die organische Phase bei 75 °C über Al₂O₃. Im Beispiel 3 leitete man die organische Phase über Al₂O₃, das mit 3 Gew.-% KOH beschichtet war (10°C), dann über Zeolith 3 Å (10 °C; Der Wassergehalt der organischen Phase betrug nach der Behandlung weniger als 3 ppm) und schließlich bei 75 °C über Zeolith 10 Å.

Man entgaste 30 min bei 210 °C und 2 mbar. Das zahlenmittlere Molekulargewicht betrug etwa 810, die Dispersität Mw/Mn etwa 1,65. Der Methylidendoppelbindungs- und Fluorgehalt des erhaltenen Polyisobutens sind in Tabelle 1 angegeben.

### Beispiele 4 und 5

Das obige Vorgehen wurde wiederholt, wobei man jedoch einen Zulauf folgender Zusammensetzung verwendete:

| | |
|---|---|
| Isobutan | 3 Gew.-% |
| n-Butan | 14 Gew.-% |
| Isobuten | 28 Gew.-% |
| Buten-1 | 23 Gew.-% |
| cis-Buten-2 | 11 Gew.-% |
| trans-Buten-2 | 21 Gew.-% |
| Butadien | 0,050 Gew.-% |

In den Reaktor wurden 8,55 mmol/h Bortrifluorid, 15,75 mmol/h Methanol und 0,43 mmol/h Ethylhexanol eingespeist.

Im Beispiel 4 behandelte man die organische Phase mit Al₂O₃, das mit 3 Gew.-% KOH beschichtet war (10 °C), dann mit Zeolith 3 Å (10°C) und schließlich bei 75 °C mit Zeolith 10 Å. Im Beipiel 5 leitete man die organische Phase über Al₂O₃, das mit 2 Gew.-% KCN beschichtet war (10 °C), dann unter Beimischung von 100 ppm Acetonitril über Zeolith 3 Å (10°C) und schließlich bei 75 °C über Zeolith 10 Å, der zuvor mit 1 Gew.-% Acetonitril dotiert worden war.

**Tabelle 1**

| Bsp. | Adsorptionsmittel | Verweilzeit [min]³⁾ | Vinylidengehalt [%] | | | | | Fluorgehalt [%]⁴⁾ | | | | | |
|---|---|---|---|---|---|---|---|---|---|---|---|---|---|
| | | | Vor Kontakt | Nach Spaltung | | | | Vor Kontakt | Nach Spaltung | | | | |
| | | | | 50 h | 100 h | 400 h | 400 h¹⁾ | | 50 h | 100 h | 100 h¹⁾ | 400 h | 400 h¹⁾ |
| Vgl. 1 | Al₂O₃²⁾ | 60 | 88 | 85 | 85 | 86 | 83 | 80 | < 1 | < 1 | < 1 | 9 | 13 |
| Vgl. 2 | Al₂O₃²⁾ | 30 | 88 | 86 | 86 | - | - | 80 | < 1 | 10 | 15 | - | - |
| 3 | Al₂O₃(KOH)/ Zeolith 3 Å/10 Å | 6/4/20 | 88 | 87 | 87 | 87 | 87 | 80 | < 1 | < 1 | 1 | 1 | 3 |
| 4 | Al₂O₃(KOH)/ Zeolith 3 Å/10 Å | 6/4/20 | 90 | 87 | 87 | 89 | 89 | 110 | 8 | 11 | 13 | 32 | 31 |
| 5 | Al₂O₃(KCN)+MeCN/ Zeolith 3 Å/10 Å | 6/4/20 | 90 | 88 | 87 | 88 | 88 | 110 | 9 | 14 | 14 | 16 | 18 |

| | | | | | | | | | | | | | |
|---|---|---|---|---|---|---|---|---|---|---|---|---|---|
| ¹⁾ Werte des 10. Zyklus. Ein Zyklus umfasst 400 h Versuchsdauer und 12 h Regenerierung der Adsorptionsmittel im Stickstoffstrom bei 200 °C. ²⁾ aktiviertes Aluminiumoxid der Fa, Procatalyse, Grade D, Korndurchmesser 2 bis 5 mm ³⁾ reelle Verweilzeit, bezogen auf das Lückenvolumen ⁴⁾ Fluorgehalte der PIB-Lösung | | | | | | | | | | | | | |

## Patentansprüche

1. Verfahren zur Herstellung von Polyisobuten mit einem zahlenmittleren Molekulargewicht von 400 bis 50000 und einem Gehalt an Methylidengruppen von mehr als 50 Mol-%, bei dem man
a) Isobuten in Gegenwart eines Katalysators polymerisiert, der eine halogenhaltige Lewis-Säure umfasst,
b) den Katalysator abtrennt und/oder deaktiviert, und
c) das erhaltene Polyisobuten mit einem Zeolith einer durchschnittlichen Porengröße von 5 bis 15 Å in Kontakt bringt.

2. Verfahren nach Anspruch 1, bei dem man das Isobuten in Gegenwart eines Verdünnungsmittels polymerisiert, wobei man eine Lösung des Polyisobutens in dem Verdünnungsmittel erhält, und die Lösung des Polyisobutens mit dem Zeolith in Kontakt bringt.

3. Verfahren nach Anspruch 1 oder 2, bei dem man das Polyisobuten oder die Lösung des Polyisobutens außerdem mit einem Säurefänger in Kontakt bringt, der unter Basen, Nitrilverbindungen und immobilisierten Basen ausgewählt ist.

4. Verfahren nach Anspruch 3, bei dem die Base unter Ammoniak und organischen Aminen ausgewählt ist.

5. Verfahren nach Anspruch 3, bei dem die Nitrilverbindung unter Acetonitril, Propionitril und Benzonitril ausgewählt ist.

6. Verfahren nach Anspruch 3, bei dem die immobilisierte Base unter Aluminiumoxid und Aluminiumoxid, das mit Hydroxiden, Oxiden, Carbonaten, Hydrogencarbonaten und/oder Cyaniden dotiert ist, ausgewählt ist.

7. Verfahren nach einem der vorhergehenden Ansprüche, bei dem man vor der Zeolith-Behandlung den Wassergehalt des Polyisobutens oder der Lösung des Polyisobutens auf weniger als 10 ppm verringert.

8. Verfahren nach Anspruch 7, bei dem man den Wassergehalt verringert, indem man das Polyisobuten oder die Lösung des Polyisobutens mit einem Zeolith einer durchschnittlichen Porengröße von 4 Å oder weniger in Kontakt bringt.

9. Verfahren nach einem der Ansprüche 2 bis 7, bei dem die Lewis-Säure Bortrifluorid ist.

10. Verfahren nach einem der Ansprüche 2 bis 9, bei dem das Verdünnungsmittel von Isobuten verschiedenene C₄-Kohlenwasserstoffe umfasst.

11. Verfahren nach einem der Ansprüche 3 bis 9, bei dem man das Isobuten in Gegenwart eines Verdünnungsmittels polymerisiert, wobei man eine Lösung des Polyisobutens in dem Verdünnungsmittel erhält, und vor dem Inkontaktbringen mit dem Zeolith das Verdünnungsmittel ganz oder teilweise entfernt oder durch Isobutenoligomere ersetzt.

## Claims

1. A process for preparing polyisobutene having a number-average molecular weight of from 400 to 50 000 and a content of methylidene groups of more than 50 mol%, in which
a) isobutene is polymerized in the presence of a catalyst which comprises a halogenated Lewis acid,
b) the catalyst is removed and/or deactivated, and
c) the resulting polyisobutene is contacted with a zeolite of an average pore size of from 5 to 15 Å.

2. The process according to claim 1, in which the isobutene is polymerized in the presence of a diluent to obtain a solution of the polyisobutene in the diluent, and the solution of the polyisobutene is contacted with the zeolite.

3. The process according to claim 1 or 2, in which the polyisobutene or the solution of the polyisobutene is also contacted with an acid scavenger which is selected from bases, nitrile compounds and immobilized bases.

4. The process according to claim 3, in which the base is selected from ammonia and organic amines.

5. The process according to claim 3, in which the nitrile compound is selected from acetonitrile, propionitrile and benzonitrile.

6. The process according to claim 3, in which the immobilized base is selected from alumina and alumina which is doped with hydroxides, oxides, carbonates, hydrogencarbonates and/or cyanides.

7. The process according to any of the preceding claims, in which the water content of the polyisobutene or of the solution of the polyisobutene is reduced to less than 10 ppm before the zeolite treatment.

8. The process according to claim 7, in which the water content is reduced by contacting the polyisobutene or the solution of the polyisobutene with a zeolite of an average pore size of 4 Å or less.

9. The process according to any of claims 2 to 7, in which the Lewis acid is boron trifluoride.

10. The process according to any of claims 2 to 9, in which the diluent comprises C₄ hydrocarbons other than isobutene.

11. The process according to any of claims 3 to 9, in which the isobutene is polymerized in the presence of a diluent to obtain a solution of the polyisobutene in the diluent and, before the contacting with the zeolite, the diluent is removed fully or partly or replaced by isobutene oligomers.

## Revendications

1. Procédé de préparation de polyisobutène ayant un poids moléculaire moyen en nombre allant de 400 à 50 000 et une teneur en groupes méthylidène de plus de 50 % en moles, en ce que :
a) on polymérise l'isobutène en présence d'un catalyseur, qui comprend un acide de Lewis halogéné,
b) on sépare et/ou désactive le catalyseur, et
c) le polyisobutène obtenu est mis en contact avec une zéolite de taille moyenne des pores allant de 5 à 15Å.

2. Procédé selon la revendication 1, dans lequel on polymérise l'isobutène en présence d'un agent de dilution, où l'on obtient une solution du polyisobutène dans l'agent de dilution et la solution du polyisobutène est mise en contact avec la zéolite.

3. Procédé selon la revendication 1 ou 2, dans lequel on met en contact le polyisobutène ou la solution du polyisobutène, en outre, avec un piégeur d'acide, qui est choisi parmi les bases, les composés nitrile et les bases immobilisées.

4. Procédé selon la revendication 3, dans lequel la base est choisie parmi l'ammoniac et des amines organiques.

5. Procédé selon la revendication 3, dans lequel le composé nitrile est choisi parmi l'acétonitrile, le propionitrile ou le benzonitrile.

6. Procédé selon la revendication 3, dans lequel la base immobilisée est choisie parmi l'oxyde d'aluminium et l'oxyde d'aluminium, qui est dopé d'hydroxydes, d'oxydes, de carbonates, d'hydrogénocarbonates et/ou de cyanures.

7. Procédé selon l'une des revendications précédentes, dans lequel on diminue, avant le traitement avec la zéolite, la teneur en eau du polyisobutène ou de la solution du polyisobutène, à moins de 10 ppm.

8. Procédé selon la revendication 7, dans lequel on diminue la teneur en eau en mettant en contact le polyisobutène ou la solution du polyisobutène avec une zéolite ayant une taille moyenne des pores de 4Å ou moins.

9. Procédé selon l'une des revendications 2 à 7, dans lequel l'acide de Lewis est le trifluorure de bore.

10. Procédé selon l'une des revendications 2 à 9, dans lequel l'agent de dilution comprend des hydrocarbures en C₄ différents de l'isobutène.

11. Procédé selon l'une des revendications 3 à 9, dans lequel on polymérise l'isobutène en présence d'un agent de dilution, où l'on obtient une solution du polyisobutène dans l'agent de dilution, et avant la mise en contact avec une zéolite, l'agent de dilution est complètement ou partiellement éliminé ou remplacé par des oligomères d'isobutène.
